# EUROPEAN PATENT SPECIFICATION

(11) **EP 4 425 593 B1**
(45) Date of publication and mention of the grant of the patent: **04.11.2026**
(21) Application number: 22886577.0
(22) Date of filing: 29.09.2022
(51) Int. Cl.: H01M 4/13, H01M 4/62, H01M 10/052, H01M 10/0525, H01M 4/02

(54) **BINDER FOR POSITIVE ELECTRODES, POSITIVE ELECTRODE MIXTURE, POSITIVE ELECTRODE, AND NONAQUEOUS ELECTROLYTE SECONDARY BATTERY**
BINDEMITTEL FÜR POSITIVE ELEKTRODEN, POSITIVE ELEKTRODENMISCHUNG, POSITIVE ELEKTRODE UND SEKUNDÄRBATTERIE MIT WASSERFREIEM ELEKTROLYT
LIANT POUR ÉLECTRODES POSITIVES, MÉLANGE D'ÉLECTRODE POSITIVE, ÉLECTRODE POSITIVE ET BATTERIE SECONDAIRE À ÉLECTROLYTE NON AQUEUX

(30) Priority: 29.10.2021 JP 2021177878
(43) Date of publication of application: 04.09.2024
(73) Proprietor: Kureha Corporation, Chuo-ku Tokyo 103-8552 (JP)
(72) Inventor: IKEDA, Takuya, Tokyo 103-8552 (JP); OKADA, Kayoko, Tokyo 103-8552 (JP); IKEYAMA, Yasufumi, Tokyo 103-8552 (JP)
(74) Representative: Novagraaf Group
(86) International application number: PCT/JP2022/036379
(87) International publication number: WO 2023/074245

(56) References cited:
- EP-A1- 3 690 990
- JP-A- 2002 216 769
- JP-A- 2018 172 596
- JP-A- 2020 527 827
- JP-A- H0 912 639

## Description

### TECHNICAL FIELD

The present invention relates to a binder for a positive electrode, a positive electrode mixture, a positive electrode, and a non-aqueous electrolyte secondary battery.

### BACKGROUND ART

A vinylidene fluoride-based polymer is widely used as a binder to adhere an active material and a current collector in an electrode of a non-aqueous electrolyte secondary battery. From the viewpoint of improving the safety and performance of the battery, the binder is required to have excellent adhesion to an active material and a current collector, and vinylidene fluoride polymers with various structures have been proposed. For example, Patent Document 1 describes using a polymer of vinylidene fluoride and 2-carboxyethyl acrylate as a binder.

On the other hand, in terms of increasing the capacity of the battery, it is desired to reduce the amount of an insulating component, that is, a binder-derived component, contained in a mixture layer and to increase the amount of an active material.

### CITATION LIST

### PATENT DOCUMENT

Patent Document 1: JP 5797206 B

### SUMMARY OF INVENTION

### TECHNICAL PROBLEM

However, there is a possibility that reducing the amount of the binder-derived component would make it difficult to sufficiently adhere the active material, the current collector, and the like, and would deteriorate the battery performance. Thus, a binder even in a small amount exhibiting high adhesion to an active material and a current collector is desired to be provided.

The present invention has been made in view of the above issues. An object of the present invention is to provide a binder for a positive electrode, the binder even in a small amount exhibiting high adhesion to an active material and a current collector; a positive electrode mixture containing the binder; a positive electrode; and a non-aqueous electrolyte secondary battery.

### SOLUTION TO PROBLEM

An embodiment of the present invention provides a binder for a positive electrode, the binder to be used for a positive electrode of a non-aqueous electrolyte secondary battery and containing: a vinylidene fluoride polymer; and an epoxy compound having two or more epoxy groups, the epoxy compound having an epoxy equivalent of 500 g/eq or less, and a total amount of the vinylidene fluoride polymer relative to a total number of moles of the epoxy groups in the binder for a positive electrode being 600 g/eq or more and 3000 g/eq or less.

An embodiment of the present invention provides a positive electrode mixture containing the binder for a positive electrode; and a positive electrode active material.

An embodiment of the present invention provides a positive electrode containing: a current collector; and a positive electrode mixture layer disposed on the current collector, in which the positive electrode mixture layer contains a cured product of the positive electrode mixture.

An embodiment of the present invention provides a non-aqueous electrolyte secondary battery having the positive electrode.

### ADVANTAGEOUS EFFECTS OF INVENTION

According to the present invention, there are obtained the binder for a positive electrode, the binder even in a small amount exhibiting high adhesion to an active material and a current collector; the positive electrode mixture containing the binder; and further the positive electrode containing a cured product of the binder for a positive electrode; and the non-aqueous electrolyte secondary battery.

### DESCRIPTION OF EMBODIMENTS

### 1. Binder for positive electrode

A binder for a positive electrode according to an embodiment of the present invention is a binder to be used for forming a positive electrode of a non-aqueous electrolyte secondary battery. The binder for a positive electrode exhibits very high adhesion to a positive electrode active material and a current collector and thus is suitably used for forming a positive electrode mixture layer. However, the use of the binder for a positive electrode according to an embodiment of the present invention is not limited to this.

Here, the binder for a positive electrode according to an embodiment of the present invention contains a vinylidene fluoride polymer and an epoxy compound having two or more epoxy groups. In addition, in the binder for a positive electrode, the epoxy compound has an epoxy equivalent of 500 g/eq or less. **That** is, the proportion of epoxy groups in the epoxy compound is relatively high. Furthermore, the total amount of the vinylidene fluoride polymer relative to the total number of moles of the epoxy groups in the binder for a positive electrode is 600 g/eq or more and 3000 g/eq or less. **That** is, the amount of vinylidene fluoride polymer per mole of the epoxy groups is relatively small. Such a binder for a positive electrode allows the epoxy groups to firmly bind to metal atoms, hydroxyl groups, and/or the like present on the surfaces of the current collector and the positive electrode active material when a positive electrode mixture layer is formed. As a result, with the binder for a positive electrode used even in a small amount, a cured product of the binder for a positive electrode firmly binds the positive electrode active material, the current collector, and the like. Hereinafter, each component in the binder for a positive electrode will be described.

### • Vinylidene fluoride polymer

The vinylidene fluoride polymer is a polymer with a vinylidene fluoride-derived structural unit as a main constituent component. The binder for a positive electrode may contain only one, or two or more vinylidene fluoride polymers. The vinylidene fluoride polymer may be a homopolymer of vinylidene fluoride or a copolymer of vinylidene fluoride and another compound; however, the proportion of the vinylidene fluoride-derived structural unit in the vinylidene fluoride polymer is preferably 50 mass% or more and 100 mass% or less, more preferably 80 mass% or more and 100 mass% or less, and even more preferably 90 mass% or more and 100 mass% or less. With the amount of the vinylidene fluoride-derived structural unit of 50 mass% or more in the vinylidene fluoride polymer, properties derived from the vinylidene fluoride are easily obtained, allowing good adhesion of the vinylidene fluoride polymer to the positive electrode active material, the current collector, and the like. The amount of the vinylidene fluoride-derived structural unit in the vinylidene fluoride polymer can be determined by means, such as analysis by ¹⁹F-NMR.

In the case where the vinylidene fluoride polymer is a copolymer of vinylidene fluoride and another compound, the type of another compound is not particularly limited, and examples include compounds represented by General Formulas (1) to (3) below, unsaturated basic acids, unsaturated basic acid monoesters, and halogenated alkyl vinyl compounds. 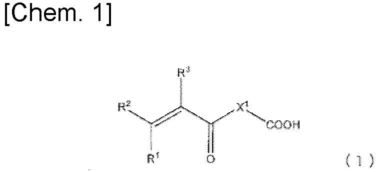 In General Formula (1) above, R¹, R², and R³ each independently represent a hydrogen atom, a fluorine atom, a chlorine atom, or an alkyl group having 1 or more and 5 or less carbon atoms. However, steric hindrance in the polymerization with vinylidene fluoride is preferably small, and R¹ and R² are preferably hydrogen or an alkyl group having 1 or more and 3 or less carbon atoms and more preferably hydrogen or a methyl group. In particular, it is preferable that both R¹ and R² be hydrogen, or only R¹ or R² be a methyl group.

In addition, X¹ in General Formula (1) above represents an atomic group having 1 or more and 19 or less atoms in the main chain and a molecular weight of 472 or less. The molecular weight of the atomic group is preferably 14 or more and 172 or less. Furthermore, the number of atoms in the main chain of X¹ is preferably 1 or more and 14 or less and more preferably 1 or more and 9 or less. The number of atoms in the main chain of X¹ refers to the number of atoms in the longest chain among chains connecting an acryloyl group and a carboxyl group. The main chain of X¹ may be a hydrocarbon chain and may contain a nitrogen atom, a sulfur atom, an oxygen atom, and/or the like.

Examples of the compound represented by General Formula (1) above include 2-carboxyethyl (meth)acrylate; (meth)acryloyloxyethyl succinate; (meth)acryloyloxypropyl succinate; (meth)acryloyloxyethyl phthalate; (meth)acrylamide-based compounds, such as N-carboxyethyl (meth)acrylamide; and thio (meth)acrylate compounds, such as carboxyethylthio (meth)acrylate. In the present specification, (meth)acrylate refers to methacrylate, acrylate, or a mixture thereof, (meth)acryl refers to methacryl, acryl, or a mixture thereof, and (meth)acryloyl refers to methacryloyl, acryloyl, or a mixture thereof. 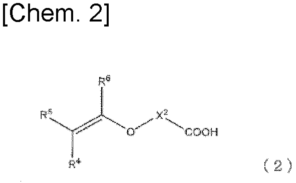 In General Formula (2) above, R⁴, R⁵, and R⁶ each independently represent a hydrogen atom, a fluorine atom, a chlorine atom, or an alkyl group having 1 or more and 5 or less carbon atoms. However, steric hindrance in the polymerization with vinylidene fluoride is preferably small, and R⁴ and R⁵ are preferably hydrogen or an alkyl group having 1 or more and 3 or less carbon atoms and more preferably hydrogen or a methyl group. In particular, it is preferable that both R⁴ and R⁵ be hydrogen, or only R⁴ or R⁵ be a methyl group.

X² in General Formula (2) above represents an atomic group having 1 or more and 19 or less atoms in the main chain and a molecular weight of 484 or less. The molecular weight of the atomic group is preferably 14 or more and 184 or less. The number of atoms in the main chain of X² is preferably 1 or more and 14 or less and more preferably 1 or more and 9 or less. The number of atoms in the main chain of X² refers to the number of atoms in the longest chain among chains connecting oxygen attached to a carbon-carbon double bond and a carboxyl group. The main chain of X² may be a hydrocarbon chain and may contain a nitrogen atom, a sulfur atom, an oxygen atom, and/or the like.

Examples of the compound represented by General Formula (2) above include vinyl carboxyalkyl ethers, such as vinyl carboxymethyl ether and vinyl carboxyethyl ether. 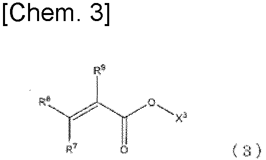 In General Formula (3) above, R⁷, R⁸, and R⁹ each independently represent a hydrogen atom, a fluorine atom, a chlorine atom, or an alkyl group having 1 or more and 5 or less carbon atoms. However, steric hindrance in the polymerization with vinylidene fluoride is preferably small, and R⁷ and R⁸ are preferably hydrogen or an alkyl group having 1 or more and 3 or less carbon atoms and more preferably hydrogen or a methyl group. In particular, it is preferable that both R⁷ and R⁸ be hydrogen, or only R⁷or R⁸ be a methyl group.

X³ in General Formula (3) above represents a hydrogen atom or a hydrocarbon group having 1 or more and 5 or less carbon atoms and containing at least one hydroxy group. Examples of the hydrocarbon group containing a hydroxy group include a hydroxyethyl group and a hydroxypropyl group.

Examples of the compound represented by General Formula (3) above include acrylic acid, methacrylic acid, 2-hydroxyethyl acrylate, 2-hydroxypropyl acrylate, 2-hydroxyethylmethyl acrylate, and 2-hydroxypropyl methacrylate.

In addition, the unsaturated basic acid is an unsaturated carboxylic acid or its derivative, and examples include compounds with one or more carboxyl groups connected by a linear or branched unsaturated alkylene group having 1 or more and 6 or less carbon atoms. More specific examples of the unsaturated basic acid include crotonic acid, maleic acid, fumaric acid, itaconic acid, and citraconic acid.

In addition, the unsaturated basic acid monoester is an ester compound derived from the above unsaturated basic acid, and its specific examples include monomethyl maleate ester, monoethyl maleate ester, monomethyl citraconate ester, and monoethyl citraconate ester.

The halogenated alkyl vinyl compound is a compound having one vinyl group and one or more halogenated alkyl groups, or a compound having one vinyl group and a halogen atom attached to the vinyl group (however, excluding vinylidene fluoride). Its specific examples include vinyl fluoride, trifluoroethylene, tetrafluoroethylene, chlorotrifluoroethylene, hexafluoropropylene, fluoroalkyl vinyl ether, and perfluoromethyl vinyl ether.

The vinylidene fluoride polymer may contain only one type, or two or more types of structural units derived from another compound. Among these, the vinylidene fluoride polymer particularly preferably contains one or more types of structural units derived from a compound represented by any of General Formulas (1) to (3) above. The vinylidene fluoride polymer containing a structural unit of these allows a carboxyl group and/or a hydroxyl group of the vinylidene fluoride polymer to react with an epoxy group of the epoxy compound, facilitating further increase in the adhesion strength of the binder for a positive electrode to the positive electrode active material, the current collector, and the like. Among the above, the vinylidene fluoride polymer particularly preferably contains a carboxyl group-derived structural unit.

The proportion of the structural unit derived from another compound (in particular, the proportion of the structural unit derived from the compound represented by any of General Formulas (1) to (3) above) in the vinylidene fluoride polymer is preferably 0.1 mass% or more and 50 mass% or less, more preferably 0.1 mass% or more and 20 mass% or less, and even more preferably 0.1 mass% or more and 10 mass% or less. **That** is, when the vinylidene fluoride polymer contains a structural unit derived from another compound, the vinylidene fluoride polymer preferably contains the vinylidene fluoride-derived structural unit in an amount of preferably 50 mass% or more and 99.9 mass% or less, more preferably 80 mass% or more and 99.9 mass% or less, and even more preferably 90 mass% or more and 99.9 mass% or less. With the amount of the structural unit derived from another compound in the above range in the vinylidene fluoride polymer, the vinylidene fluoride polymer has good adhesion to the positive electrode active material, the current collector, and the like. The amount of the structural unit derived from another compound can be determined, for example, by analyzing the vinylidene fluoride copolymer by ¹⁹F-NMR or FT-IR.

As described above, the binder for a positive electrode may contain a plurality of types of vinylidene fluoride polymers. However, in terms of firmly adhering the positive electrode active material and the current collector with a small amount of the binder for a positive electrode, the binder for a positive electrode preferably contains a large amount of a vinylidene fluoride polymer (e.g., such as a vinylidene fluoride homopolymer or a copolymer containing a structural unit derived from a compound represented by any of General Formulas (1) to (3) above and a vinylidene fluoride-derived structural unit) that is less likely to be swollen with an electrolyte solution or the like. In other words, the amount of a vinylidene fluoride polymer that is easily swollen with an electrolyte solution is preferably small, and more specifically, the amount is preferably less than 20 mass% relative to the solid content amount of the binder for a positive electrode (the total amount excluding a component that volatilizes during curing). Examples of the vinylidene fluoride polymer that is easily swollen with an electrolyte solution or the like include a vinylidene fluoride polymer mainly containing a halogenated alkyl vinyl compound-derived structural unit and a vinylidene fluoride-derived structural unit.

Here the weight average molecular weight of the vinylidene fluoride polymer is preferably 100000 or more and 10000000 or less, more preferably 200000 or more and 5000000 or less, and even more preferably 300000 or more and 2000000 or less. With the weight average molecular weight of the vinylidene fluoride polymer in the above range, the physical properties of the vinylidene fluoride polymer easily fall within desired ranges, facilitating binding to the active material, the current collector, and a conductive auxiliary. The weight average molecular weight is a value measured by gel permeation chromatography (GPC) calibrated with polystyrene.

**In** addition, the total amount of the vinylidene fluoride polymer in the binder for a positive electrode is preferably 80 mass% or more and 99.9 mass% or less and more preferably 90 mass% or more and 99 mass% or less relative to the solid content amount of the binder for a positive electrode (the total amount excluding a component that volatilizes during curing). With the amount of the vinylidene fluoride polymer in the above range, the binder for a positive electrode readily exhibits physical properties derived from the vinylidene fluoride polymer.

### • Epoxy compound

The epoxy compound is a compound having two or more epoxy groups per molecule and having an epoxy equivalent of 500 g/eq or less. The "epoxy equivalent" as used in the present specification is theoretically a value obtained by dividing the molecular weight of an epoxy compound by the number of epoxy groups contained in the epoxy compound. In addition, in the present specification, a value calculated by a measurement method specified in JIS K7236: 2001 is also used as "epoxy equivalent". When an epoxy compound has the epoxy equivalent of 500 g/eq or less, the epoxy compound easily interacts with the active material, the current collector, and the like when a positive electrode mixture layer is formed using the binder for a positive electrode. The epoxy equivalent is more preferably 300 g/eq or less and even more preferably 200 g/eq or less. Typically, the lower limit is 43 g/eq. The epoxy equivalent can be theoretically calculated by determining the structure of the epoxy compound. In addition, it can also be calculated by a measurement method specified in JIS K7236: 2001.

The structure of the epoxy compound is not particularly limited and may be, for example, an aliphatic epoxy compound, an aromatic epoxy compound, or an alicyclic epoxy compound.

Examples of the aliphatic epoxy-based compound include bifunctional aliphatic epoxy-based compounds, such as neopentyl glycol diglycidyl ether, 1,6-hexanediol diglycidyl ether, ethylene glycol diglycidyl ether, diethylene glycol diglycidyl ether, polyethylene glycol diglycidyl ether, and polypropylene glycol diglycidyl ether; trifunctional aliphatic epoxy-based compounds, such as glycerol triglycidyl ether, trimethylolpropane triglycidyl ether, triglycidyl isocyanurate and its derivatives, and pentaerythritol triglycidyl ether; tetrafunctional aliphatic epoxy-based compounds, such as pentaerythritol tetraglycidyl ether, diglycerol tetraglycidyl ether, ditrimethylolpropane tetraglycidyl ether, and sorbitol tetraglycidyl ether; pentafunctional aliphatic epoxy-based compounds, such as polyglycerol pentaglycidyl ether, pentaerythritol pentaglycidyl ether, and dipentaerythritol pentaglycidyl ether; hexafunctional aliphatic epoxy-based compounds, such as sorbitol hexaglycidyl ether and dipentaerythritol hexaglycidyl ether; and polyfunctional aliphatic epoxy-based compounds, such as trimethylolpropane polyglycidyl ether, pentaerythritol polyglycidyl ether, diglycerol polyglycidyl ether, polyglycerol polyglycidyl ether, and sorbitol polyglycidyl ether.

Examples of the aromatic epoxy-based compound include bifunctional aromatic epoxy-based compounds, such as diglycidyl terephthalate, diglycidyl-o-phthalate, diglycidyl resorcinol ether, bisphenol A-type diglycidyl compounds including 2,2-bis(4-glycidyloxyphenyl)propane, bisphenol F-type diglycidyl compounds, and biphenyl-type diglycidyl compounds; and polyfunctional aromatic epoxy-based compounds, such as phenol novolac-type epoxy-based compounds and cresol novolac-type epoxy-based compounds.

Examples of the alicyclic epoxy-based compound include bifunctional alicyclic epoxy-based compounds, such as hydrogenated bisphenol A-type diglycidyl compounds, hydrogenated bisphenol F-type diglycidyl compounds, and hydrogenated biphenyl-type diglycidyl compounds.

Furthermore, the epoxy compound may be a glycidylamine-based compound, such as 4,4'-methylenebis(N,N-diglycidylaniline) or N,N-diglycidyl-4-glycidyloxyaniline.

Among the above, an epoxy compound containing no amine is preferable in terms of preventing thickening of the binder for a positive electrode and the like.

In addition, the epoxy compound may be a solid compound but is preferably a liquid compound because it is easily mixed uniformly with the vinylidene fluoride polymer. The viscosity of the liquid epoxy compound measured at 25°C with an E-type viscometer is preferably 100 Pa·s or less and more preferably 50 Pa·s or less.

In addition, the molecular weight of the epoxy compound is preferably 2000 or less and more preferably 1000 or less. Furthermore, the molecular weight of the epoxy compound is 80 or more. With the molecular weight in the above range, the epoxy compound is easily mixed uniformly with the vinylidene fluoride polymer. Moreover, the epoxy compound with a smaller molecular weight tends to have a lower epoxy equivalent.

The amount of the epoxy compound in the binder for a positive electrode is preferably 0.1 mass% or more and 20 mass% or less and more preferably 1 mass% or more and 10 mass% or less relative to the solid content amount of the binder for a positive electrode (the total amount excluding a component that volatilizes during curing). With the amount of the epoxy compound in the above range, the total amount of the vinylidene fluoride polymer can be 600 g/eq or more and 3000 g/eq or less relative to the total number of epoxy groups contained in the binder for a positive electrode.

### • Polar solvent

The binder for a positive electrode may further contain a polar solvent. With a polar solvent contained in the binder for a positive electrode, the vinylidene fluoride polymer and the epoxy compound can be dissolved or dispersed, allowing the binder for a positive electrode to be made in a liquid state.

Examples of the polar solvent include amide compounds, such as dimethylformamide, N,N-dimethylacetamide, and N-methylpyrrolidone; alcohols, such as methanol, ethanol, isopropyl alcohol, 2-ethyl-1-hexanol, 1-nonanol, lauryl alcohol, and tripropylene glycol; amine compounds, such as o-toluidine, m-toluidine, and p-toluidine; 1-ethyl -3-methylimidazolium bis(trifluoromethylsulfonyl) imide; lactones, such as γ-butyrolactone and δ-butyrolactone; and sulfoxide-sulfone compounds, such as dimethyl sulfoxide and sulfolane. The binder for a positive electrode may contain only one polar solvent or may contain two or more polar solvents.

The amount of the polar solvent is preferably 500 parts by mass or more and 50000 parts by mass or less and more preferably 1000 parts by mass or more and 10000 parts by mass or less per 100 parts by mass of the total amount of the vinylidene fluoride polymer and the epoxy compound. With the amount of the polar solvent in the above range, the vinylidene fluoride polymer and the epoxy compound can be uniformly dispersed or dissolved in the polar solvent.

### • Additional component

The binder for a positive electrode may contain a component other than the above vinylidene fluoride polymer, epoxy compound, and polar solvent without impairing the object and effects of the present invention. For example, the binder for a positive electrode may further contain an additional resin, such as an acrylic resin; a filler, such as an inorganic filler; an additive of various types; and/or the like.

### • Physical properties

The binder for a positive electrode contains a vinylidene fluoride polymer and an epoxy compound and may be a solid composition, a liquid composition, or a slurry composition.

In addition, the amount of the vinylidene fluoride polymer relative to the total number of epoxy groups in the binder for a positive electrode is 600 g/eq or more and 3000 g/eq or less, preferably 700 g/eq or more and 2500 g/eq or less, and more preferably 800 g/eq or more and 2000 g/eq or less. With the amount of the vinylidene fluoride polymer in the above range relative to the total number of epoxy groups, the binder for a positive electrode even in a small amount can firmly adhere the positive electrode active material and the current collector. The value can be determined by analyzing the composition to determine the amount of the vinylidene fluoride polymer, the amount of the epoxy compound, and the structure of the epoxy compound. In addition, the value can also be determined by determining the amount of the vinylidene fluoride polymer, the amount of the epoxy compound, and the epoxy equivalent of the epoxy compound calculated by the measurement method specified in JIS K7236: 2001.

### • Preparation method

A method of preparing the binder for a positive electrode is not particularly limited and is appropriately selected according to its composition. For example, a binder for a positive electrode, the binder containing a powdery vinylidene fluoride polymer and a liquid epoxy compound, may be prepared by a method in which a liquid epoxy compound is mixed with the powdery vinylidene fluoride polymer to adsorb the epoxy compound to the vinylidene fluoride polymer. In addition, for a binder for a positive electrode, the binder further containing a polar solvent, the vinylidene fluoride polymer, the epoxy compound, and the polar solvent may be mixed to disperse or dissolve the vinylidene fluoride polymer and the epoxy compound in the polar solvent.

### 2. Positive electrode mixture

A positive electrode mixture can be prepared by miking the binder for a positive electrode described above and a positive electrode active material. At this time, a conductive auxiliary, a solvent, an additional additive, and/or the like may be further added.

The amount of the binder for a positive electrode in the positive electrode mixture is not particularly limited, but as described above, the binder for a positive electrode even in a small amount exhibits sufficient adhesion to the positive electrode active material and the like. Thus, the proportion of the solid content derived from the binder for a positive electrode is preferably 0.2 mass% or more and 20 mass% or less, more preferably 0.4 mass% or more and 10 mass% or less, and even more preferably 0.6 mass% or more and 4 mass% or less relative to the total amount of the solid content derived from the binder for a positive electrode (the total amount excluding a component that volatilizes during curing), the positive electrode active material, and a conductive auxiliary.

For the positive electrode active material, a positive electrode active material known in the art can be used. Examples of the positive electrode active material include a lithium-based positive electrode active material containing lithium. Its specific examples include complex metal chalcogenides represented by a general formula LiMY₂ (where M is one type, or two or more types of elements selected from transition metals, such as Co, Ni, Fe, Mn, Cr, or V; and Y is a chalcogen element, such as O or S), such as LiCoO₂ or LiNiₓCo₁₋ₓO₂ (0 < x ≤ 1); complex metal oxides having a spinel structure, such as LiMn₂O₄; and olivine-type lithium compounds, such as LiFePO₄. In addition, the surface of the positive electrode active material may be coated with a material of various types. The positive electrode active material may be a commercially available product.

The amount of the positive electrode active material in the positive electrode mixture is appropriately selected according to the type of positive electrode active material and physical properties of a desired positive electrode mixture layer and is not particularly limited, but typically, the amount is preferably 50 mass% or more and 99.9 mass% or less relative to the total amount of the binder for a positive electrode (the total amount excluding a component that volatilizes during curing), the positive electrode active material, and a conductive auxiliary. With the amount of the positive electrode active material in the above range, for example, a sufficient charge/discharge capacity is obtained, facilitating good battery performance. The binder for a positive electrode described above even in a small amount exhibits sufficient adhesion to the positive electrode active material and the like, and thus the amount of the positive electrode active material may be 90 mass% or more relative to the total amount of the solid content derived from the binder for a positive electrode, the positive electrode active material, and a conductive auxiliary.

In addition, the conductive auxiliary is not particularly limited as long as it is a compound that can further increase electrical conductivity between the positive electrode active materials or between the positive electrode active material and the current collector. Examples of the conductive auxiliary include acetylene black, Ketjen Black, carbon black, graphite powder, carbon nanofibers, carbon nanotubes, and carbon fibers.

The amount of the conductive auxiliary contained in the positive electrode mixture is appropriately selected according to the type of conductive auxiliary and the like. From the viewpoint of increasing both the improvement of the conductivity and the dispersibility of the conductive auxiliary, the amount of the conductive auxiliary is preferably 0.1 mass% or more and 15 mass% or less, more preferably 0.1 mass% or more and 7 mass% or less, and even more preferably 0.1 mass% or more and 5 mass% or less relative to the total amount of the solid content derived from the binder for a positive electrode, the positive electrode active material, and the conductive auxiliary.

The positive electrode mixture may contain a solvent and/or the like different from the polar solvent contained in the binder for a positive electrode. The solvent can be selected from among the polar solvents that can be contained in the binder for a positive electrode described above.

The total amount of the solvent (including the amount of the polar solvent in the binder) in the positive electrode mixture is not particularly limited but typically is preferably 20 parts by mass or more and 150 parts by mass or less per 100 parts by mass of the positive electrode active material described above.

The positive electrode mixture may further contain a dispersant, an adhesion aide, a thickener, and/or the like, and a known compound can be used for these. The amount of a compound of these are not particularly limited as long as the object and effects of the present invention are not impaired, but the amount is preferably 15 mass% or less relative to the total amount of the solid content derived from the binder for a positive electrode and the positive electrode active material.

The positive electrode mixture may further contain an additive, including a phosphorus compound; a sulfur compound; an organic acid; nitrogen compounds, such as an amine compound and an ammonium compound; an organic ester; various types of coupling agents, such as a silane-based, titanium-based, and aluminum-based coupling agent; and resins, such as a vinylidene fluoride polymer other than the vinylidene fluoride copolymer described above, poly(tetrafluoroethylene) (PTFE), styrene-butadiene rubber (SBR), and polyacrylonitrile (PAN). These are not particularly limited as long as the object and effects of the present invention are not impaired, but the amount is preferably 15 mass% or less relative to the total amount of the solid content derived from the binder for a positive electrode and the positive electrode active material.

The positive electrode mixture may be prepared by mixing all the components at once or may be prepared by mixing some components first and then mixing the remaining components. In addition, preparation of the positive electrode mixture and preparation of the binder for a positive electrode may be performed at the same time. For example, the vinylidene fluoride polymer, epoxy compound, positive electrode active material, polar solvent, and the like described above may be mixed to obtain a positive electrode mixture containing the binder for a positive electrode (vinylidene fluoride polymer and epoxy compound) and the positive electrode active material.

The viscosity of the positive electrode mixture is not particularly limited as long as it can prevent dripping, uneven application, and delay in drying after application when the positive electrode mixture is applied to obtain a positive electrode mixture layer and has good workability in preparing the positive electrode mixture and good applicability. Typically, the viscosity is preferably 0.1 Pa·s or more and 100 Pa·s or less. The viscosity of the positive electrode mixture is measured with an E-type viscometer or the like.

### 3. Positive electrode

The positive electrode mixture described above can be used to form positive electrode mixture layers of various non-aqueous electrolyte secondary batteries. The positive electrode of a non-aqueous electrolyte secondary battery includes, for example, a current collector and a positive electrode mixture layer disposed on the current collector. In this case, the positive electrode mixture described above can be used to form the positive electrode mixture layer.

### • Current collector

The current collector is a terminal for extracting electricity. A material for each of the current collectors is not particularly limited, and metal foil, metal mesh, or the like of aluminum, copper, iron, stainless steel, steel, nickel, titanium, or the like can be used. In addition, the current collector may be one produced by applying the metal foil, metal mesh, or the like on a surface of a medium.

### • Positive electrode mixture layer

The positive electrode mixture layer is a layer formed by applying the positive electrode mixture described above onto the current collector and curing the positive electrode mixture. The positive electrode mixture layer may be formed only on one surface of the current collector or may be formed on both surfaces.

The components in the positive electrode mixture layer are appropriately selected according to the type of non-aqueous electrolyte secondary battery. The positive electrode mixture layer typically contains a cured product of the binder for a positive electrode and the positive electrode active material described above but may also contain an additive of various types, such as a conductive auxiliary, a dispersant, an adhesion aide, and a thickener. These can be the same as those described for the positive electrode mixture.

Here, the thickness of the positive electrode mixture layer is not particularly limited but is preferably 1 µm or more and 1000 µm or less in one example. In addition, the areal weight of the positive electrode mixture layer formed on one surface of the current collector is not particularly limited and can be any areal weight but is preferably 50 g/m² or more and 1000 g/m² or less and more preferably 100 g/m² or more and 500 g/m² or less in one example.

### • Formation of positive electrode mixture layer

The positive electrode mixture layer can be formed by applying the positive electrode mixture described above onto the current collector and curing the positive electrode mixture.

In addition, the method of applying the positive electrode mixture is not particularly limited, and a doctor blade method, a reverse roll method, a comma bar method, a gravure method, an air knife method, a die coating method, a dip coating method, or the like can be employed.

In addition, after the application of the positive electrode mixture, it is heated at any given temperature to remove the polar solvent by drying and thermally cure the epoxy compound. The curing temperature is preferably 60°C or higher and 500°C or lower and more preferably 80°C or higher and 200°C or lower in one example. The heating may be performed a plurality of times at different temperatures. The solvent in the positive electrode mixture may be removed by drying under atmospheric pressure, increased pressure, or reduced pressure. After the drying, a heat treatment may be further performed.

After the application and drying of the positive electrode mixture, press treatment may be further performed. Performing the press treatment can improve the electrode density. In one example, a pressing pressure is preferably 1 kPa or more and 10 GPa or less.

### 4. Non-aqueous electrolyte secondary battery

As described above, the binder for a positive electrode and the positive electrode mixture described above can be used in positive electrodes of various non-aqueous electrolyte secondary batteries and the like but may be used to form an additional layer in the non-aqueous electrolyte secondary battery.

### EXAMPLES

Hereinafter, specific examples of the present invention will be described together with comparative examples, but the present invention is not limited to these.

### 1. Preparation of vinylidene fluoride polymer composition

Vinylidene fluoride polymers A and B were prepared by the following methods.

### (Preparation of vinylidene fluoride polymer A)

In an autoclave with an internal volume of 2 liters, 1096 g of ion-exchanged water, 0.2 g of Metolose 90SH-100 (available from Shin-Etsu Chemical Co., Ltd.), 2.2 g of a 50 wt.% diisopropyl peroxydicarbonate-freon 225cb solution, 426 g of vinylidene fluoride, and an initial addition amount of 0.2 g of acryloyloxypropyl succinate were placed, and the temperature was raised to 26°C over 1 hour. The temperature was then maintained at 26°C, and a 6 mass% acryloyloxypropyl succinate aqueous solution was gradually added at a rate of 0.5 g/min. The resulting polymer slurry was dehydrated and dried, and a vinylidene fluoride polymer A was obtained. A total of 4 g including the initially added amount of acryloyloxypropyl succinate was added.

### (Preparation of vinylidene fluoride polymer B)

KF #7200 available from Kureha Corporation was used as a homopolymer of vinylidene fluoride (vinylidene fluoride polymer B).

### 2. Preparation of epoxy compounds

The following epoxy compounds were prepared.

**[Table 1]**

| No. | Epoxy compound name | Number of epoxy groups per molecule | Epoxy equivalent (g/eq) |
|---|---|---|---|
| A | Glycerol polyglycidyl ether | 2.5 | 141 |
| B | Diglycerol polyglycidyl ether | 3 | 159 |
| C | Sorbitol polyglycidyl ether | 4 | 167 |
| D | 2,2-Bis(4-glycidyloxyphenyl)propane | 2 | 170 |
| E | Triglycidyl isocyanurate | 3 | 99 |
| F | 4,4'-Methylenebis(N,N-diglycidylaniline) | 4 | 106 |
| G | N,N-Diglycidyl-4-glycidyloxyaniline | 3 | 92 |
| a (for comparison) | Allyl glycidyl ether | 1 | 114 |
| b (for comparison) | Poly(bisphenol A-co-epichlorohydrin) | 2 | 538 |

### 3. Preparation of binder for positive electrode and/or positive electrode mixture

### (Reference Examples 1 to 3)

The vinylidene fluoride polymer A or B, a positive electrode active material (LiNi_{0.5}Co_{0.2}Mn_{0.3}O₂ (NCM523), average particle size 11 µm), and a conductive auxiliary (Super-P, available from Imerys Graphite & Carbon) in composition ratios presented in Table 2 or 3 were dispersed in N-methylpyrrolidone, and slurry positive electrode mixtures (Reference Examples 1 and 2) were prepared.

### (Examples 1 to 9 and Comparative Examples 1 to 4)

An epoxy compound, the vinylidene fluoride polymer A, a positive electrode active material (NCM523), and a conductive auxiliary (Super-P) in composition ratios presented in Table 2 were dispersed in N-methylpyrrolidone, and positive electrode mixtures were prepared.

### (Examples 10 to 13 and Comparative Examples 5 and 6)

An epoxy compound, the vinylidene fluoride polymer B, a positive electrode active material (NCM523), and a conductive auxiliary (Super-P) in composition ratios presented in Table 3 were dispersed in N-methylpyrrolidone, and positive electrode mixtures were prepared.

### 4. Evaluation

The positive electrode mixtures obtained in the reference examples, examples, and comparative examples described above were each applied onto a 15-µm thick aluminum foil with a bar coater and cured, and positive electrodes were obtained. The positive electrode mixtures were cured at 110°C for 30 minutes in a thermostatic vessel with nitrogen circulation. A positive electrode with a one-side areal weight of 200 ± 20 g/m² was used as a positive electrode for evaluation.

The resulting positive electrode was cut to a length of 50 mm and a width of 20 mm, and the peel strength of the mixture layer was evaluated by the following method. The results are presented in Tables 2 and 3. First, the mixture layer-formed surface and a thick plastic plate (made of acrylic resin, thickness 5 mm) were bonded together with a double-sided tape, and a 90° peel strength test (measurement of the strength required for peeling) was performed in accordance with JIS K 6854-1. The test speed was 10 mm per minute. A higher value can be said to indicate a higher adhesion strength.

Then, each positive electrode mixture of the examples and the comparative examples was evaluated by comparing the measured peel strength with the peel strength of any of Reference Examples 1 to 3 with the same type of vinylidene fluoride polymer and the same amount of the conductive auxiliary relative to the amount of the positive electrode active material. A larger difference from or a larger ratio to the reference example indicates a better result.

**[Table 2]**

| | Epoxy compound | | Vinylidene fluoride polymer (PVDF) | | Composition ratio of positive electrode mixture | | | | Peel strength | | |
|---|---|---|---|---|---|---|---|---|---|---|---|
| | Type | Epoxy equivalent (g/eq) | Type | PVDF/epoxy groups (g/eq) | Epoxy compound [parts by mass] | PVDF parts by mass] | Conductive auxiliary (SP) [parts by mass] | Positive electrode active material (NCM523) [parts by mass] | Peel strength (gf/mm) | Difference from Reference Example | Ratio to Reference Example |
| Example 1 | A | 141.0 | A | 1410 | 0.20 | 2.0 | 2.0 | 100 | 12.46 | 5.03* | 1.68* |
| Example 2 | B | 159.0 | A | 1838 | 0.17 | 2.0 | 2.0 | 100 | 13.27 | 5.84* | 1.79* |
| Example 3 | B | 159.0 | A | 2484 | 0.10 | 1.5 | 1.5 | 100 | 10.97 | 3.50** | 1.47** |
| Example 4 | C | 167.0 | A | 1931 | 0.17 | 2.0 | 2.0 | 100 | 13.33 | 5.90* | 1.79* |
| Example 5 | D | 170.2 | A | 1702 | 0.20 | 2.0 | 2.0 | 100 | 11.04 | 3.61* | 1.49* |
| Example 6 | E | 99.1 | A | 1708 | 0.12 | 2.0 | 2.0 | 100 | 13.01 | 5.58* | 1.75* |
| Example 7 | F | 105.6 | A | 1704 | 0.12 | 2.0 | 2.0 | 100 | 11.62 | 4.19* | 1.56* |
| Example 8 | G | 92.4 | A | 1756 | 0.10 | 2.0 | 2.0 | 100 | 11.09 | 3.66* | 1.49* |
| Example 9 | G | 92.4 | A | 832 | 0.20 | 2.0 | 2.0 | 100 | 11.16 | 3.73* | 1.50* |
| Reference Example 1 | - | - | A | - | - | 2.0 | 2.0 | 100 | 7.43 | - | - |
| Reference Example 2 | - | - | A | - | - | 1.5 | 1.5 | 100 | 7.47 | - | - |
| Comparative Example 1 | a | 114.1 | A | 1171 | 0.20 | 2.0 | 2.0 | 100 | 7.58 | 0.15* | 1.02* |
| Comparative Example 2 | b | 537.5 | A | 1584 | 0.51 | 1.5 | 1.5 | 100 | 6.49 | -0.98** | 0.87** |
| Comparative Example 3 | B | 159.0 | A | 15900 | 0.02 | 1.5 | 1.5 | 100 | 7.98 | 0.51** | 1.07** |
| Comparative Example 4 | G | 92.4 | A | 277 | 0.50 | 1.5 | 2.0 | 100 | 8.14 | 0.71* | 1.09* |

| | | | | | | | | | | | |
|---|---|---|---|---|---|---|---|---|---|---|---|
| ^{*} Comparison with Reference Example 1, ^{**} Comparison with Reference Example 2 | | | | | | | | | | | |

**[Table 3]**

| | Epoxy compound | | Vinylidene fluoride polymer (PVDF) | | Composition ratio of positive electrode mixture | | | | Peel strength | | |
|---|---|---|---|---|---|---|---|---|---|---|---|
| | Type | Epoxy equivalent (g/eq) | Type | PVDF/epoxy groups (g/eq) | Epoxy compound [parts by mass] | PVDF [parts by mass] | Conductive auxiliary (SP) [parts by mass] | Positive electrode active material (NCM523) [parts by mass] | Peel strength (gf/mm) | Difference from Reference Example | Ratio to Reference Example |
| Example 10 | A | 141.0 | B | 2014 | 0.14 | 2 | 2 | 100 | 3.82 | 0.92^{***} | 1.32^{***} |
| Example 11 | D | 170.2 | B | 1702 | 0.20 | 2 | 2 | 100 | 4.19 | 1.28^{***} | 1.44^{***} |
| Example 12 | G | 92.4 | B | 1756 | 0.10 | 2 | 2 | 100 | 5.76 | 2.86^{***} | 1.99^{***} |
| Example 13 | G | 92.4 | B | 832 | 0.20 | 2 | 2 | 100 | 5.03 | 2.13^{***} | 1.73^{***} |
| Reference Example 3 | - | - | B | - | - | 2 | 2 | 100 | 2.90 | - | - |
| Comparative Example 5 | G | 92.4 | B | 92 | 1.00 | 1 | 2 | 100 | 0.81 | -2.10^{***} | 0.28^{***} |
| Comparative Example 6 | a | 114.1 | B | 1691 | 0.14 | 2 | 2 | 100 | 2.89 | -0.02^{***} | 0.99^{***} |

| | | | | | | | | | | | |
|---|---|---|---|---|---|---|---|---|---|---|---|
| *** Comparison with Reference Example 3 | | | | | | | | | | | |

As presented in Tables 2 and 3 above, the peel strength, which is a strength required for peeling, increased 1.4 times or more in all examples (Examples 1 to 13), where the epoxy compound and the vinylidene fluoride polymer were contained, the epoxy equivalent of the epoxy compound was 500 g/eq or less, and the total amount of the vinylidene fluoride polymer relative to the total number of moles of the epoxy groups contained in the binder (PVDF/epoxy groups) was 600 g/eq or more and 3000 g/eq or less.

In contrast to this, in Comparative Examples 1 and 6, where the epoxy compound a having only one epoxy group was used, the peel strength hardly changed compared with Reference Examples 1 and 3, where no epoxy compound was added. In addition, in Comparative Example 2, where the epoxy compound b with too high an epoxy equivalent was used, the addition of the epoxy compound b reduced the peel strength. The amount of the epoxy group was probably insufficient.

In addition, the peel strength hardly changed when the total amount of the vinylidene fluoride polymer relative to the total number of moles of the epoxy groups (PVDF/epoxy groups) exceeded 3000 g/eq (Comparative Example 3). The relative number of epoxy groups was probably too small to sufficiently exhibit the effect.

Furthermore, the peel strength either did not change or significantly decreased when the total amount of the vinylidene fluoride polymer relative to the total number of moles of the epoxy groups (PVDF/epoxy groups) was less than 600 g/eq (Comparative Examples 4 and 5). The excess amount of the epoxy compound with a relatively low molecular weight probably reduced the mechanical strength.

The present application claims priority from the Japanese Patent Application No. 2021-177878 filed on October 29, 2021.

### INDUSTRIAL APPLICABILITY

According to the present invention, there are obtained the binder for a positive electrode, the binder even in a small amount exhibiting high adhesion to an active material and a current collector; the positive electrode mixture containing the binder; and further the positive electrode containing a cured product of the binder for a positive electrode; and the non-aqueous electrolyte secondary battery. Thus, the binder for a positive electrode is very useful for manufacturing a non-aqueous electrolyte secondary battery and the like.

## Claims

1. A binder for a positive electrode, the binder to be used for a positive electrode of a non-aqueous electrolyte secondary battery and comprising:
a vinylidene fluoride polymer; and
an epoxy compound comprising two or more epoxy groups,
the epoxy compound having an epoxy equivalent of 500 g/eq or less, and
a total amount of the vinylidene fluoride polymer relative to a total number of moles of the epoxy groups in the binder for a positive electrode being 600 g/eq or more and 3000 g/eq or less.

2. The binder for a positive electrode according to claim 1, wherein the vinylidene fluoride polymer comprises:
a vinylidene fluoride-derived structural unit; and
a structural unit derived from at least one compound selected from the group consisting of a compound represented by any of the following General Formulas (1) to (3), an unsaturated basic acid, an unsaturated basic acid monoester, and a halogenated alkyl vinyl compound,
wherein a proportion of the vinylidene fluoride-derived structural unit in the vinylidene fluoride polymer is 50 mass% or more and 99.9 mass% or less: 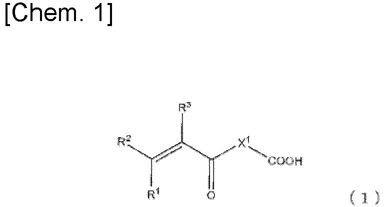
where in General Formula (1), R¹ to R³ each independently represent a hydrogen atom, a fluorine atom, a chlorine atom, or an alkyl group having 1 or more and 5 or less carbon atoms; and X¹ represents an atomic group with a molecular weight of 472 or less with a main chain having 1 or more and 19 or less atoms; 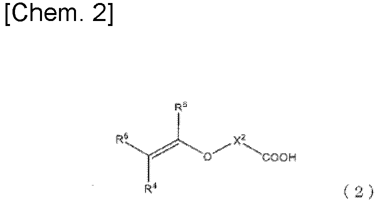 where in General Formula (2), R⁴ to R⁶ each independently represent a hydrogen atom, a fluorine atom, a chlorine atom, or an alkyl group having 1 or more and 5 or less carbon atoms; and X² represents an atomic group with a molecular weight of 484 or less with a main chain having 1 or more and 19 or less atoms; and 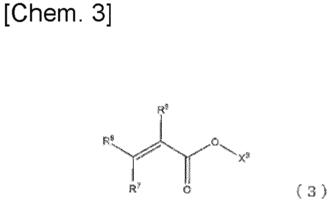 where in General Formula (3), R⁷ to R⁹ each independently represent a hydrogen atom, a fluorine atom, a chlorine atom, or an alkyl group having 1 or more and 5 or less carbon atoms; and X³ represents a hydrogen atom or a hydrocarbon group having 1 or more and 5 or less carbon atoms and comprising one or more hydroxy groups.

3. The binder for a positive electrode according to claim 1, further comprising a polar solvent, wherein
the epoxy compound and the vinylidene fluoride polymer are dissolved or dispersed in the polar solvent.

4. The binder for a positive electrode according to claim 2, further comprising a polar solvent, wherein
the epoxy compound and the vinylidene fluoride polymer are dissolved or dispersed in the polar solvent.

5. A positive electrode mixture, comprising:
the binder for a positive electrode described in any one of claims 1 to 4; and
a positive electrode active material.

6. A positive electrode, comprising:
a current collector; and
a positive electrode mixture layer disposed on the current collector,
the positive electrode mixture layer comprising a cured product of the positive electrode mixture described in claim 5.

7. A non-aqueous electrolyte secondary battery, comprising the positive electrode described in claim 6.

## Patentansprüche

1. Bindemittel für eine positive Elektrode, wobei das Bindemittel für eine positive Elektrode einer Sekundärbatterie mit wasserfreiem Elektrolyten verwendet werden soll und umfasst:
ein Vinylidenfluoridpolymer und
eine Epoxidverbindung, die zwei oder mehr Epoxidgruppen umfasst,
wobei die Epoxidverbindung ein Epoxidäquivalent von 500 g/eq oder weniger aufweist und
wobei eine Gesamtmenge des Vinylidenfluoridpolymers, bezogen auf eine Gesamtmolzahl der Epoxidgruppen im Bindemittel für eine positive Elektrode, 600 g/eq oder mehr und 3000 g/eq oder weniger beträgt.

2. Bindemittel für eine positive Elektrode nach Anspruch 1, wobei das Vinylidenfluoridpolymer umfasst:
eine von Vinylidenfluorid abgeleitete Struktureinheit und
eine Struktureinheit, abgeleitet von mindestens einer Verbindung, ausgewählt aus der Gruppe, bestehend aus einer Verbindung, dargestellt durch eine der folgenden allgemeinen Formeln (1) bis (3), einer ungesättigten basischen Säure, einem ungesättigten basischen Säuremonoester und einer halogenierten Alkylvinylverbindung,
wobei ein Anteil der von Vinylidenfluorid abgeleiteten Struktureinheit im Vinylidenfluoridpolymer 50 Massen-% oder mehr und 99,9 Massen-% oder weniger beträgt: 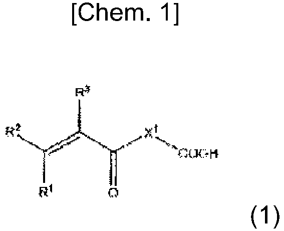
wobei in der allgemeinen Formel (1) R¹ bis R³ jeweils unabhängig voneinander für ein Wasserstoffatom, ein Fluoratom, ein Chloratom oder eine Alkylgruppe mit 1 oder mehr und 5 oder weniger Kohlenstoffatom(en) stehen und X¹ für eine Atomgruppe mit einem Molekulargewicht von 472 oder weniger mit einer Hauptkette steht, die 1 oder mehr und 19 oder weniger Atom(e) aufweist; 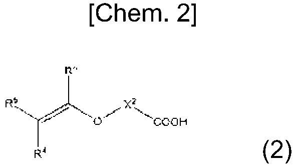
wobei in der allgemeinen Formel (2) R⁴ bis R⁶ jeweils unabhängig voneinander für ein Wasserstoffatom, ein Fluoratom, ein Chloratom oder eine Alkylgruppe mit 1 oder mehr und 5 oder weniger Kohlenstoffatom(en) stehen und X² für eine Atomgruppe mit einem Molekulargewicht von 484 oder weniger mit einer Hauptkette steht, die 1 oder mehr und 19 oder weniger Atom(e) aufweist; und 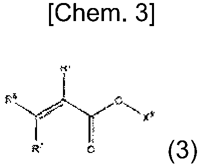
wobei in der allgemeinen Formel (3) R⁷ bis R⁹ jeweils unabhängig voneinander für ein Wasserstoffatom, ein Fluoratom, ein Chloratom oder eine Alkylgruppe mit 1 oder mehr und 5 oder weniger Kohlenstoffatom(en) stehen und X³ für ein Wasserstoffatom oder eine Kohlenwasserstoffgruppe steht, die 1 oder mehr und 5 oder weniger Kohlenstoffatom(e) aufweist und eine oder mehrere Hydroxygruppe(n) umfasst.

3. Bindemittel für eine positive Elektrode nach Anspruch 1, ferner umfassend ein polares Lösungsmittel, wobei
die Epoxidverbindung und das Vinylidenfluoridpolymer im polaren Lösungsmittel gelöst oder dispergiert sind.

4. Bindemittel für eine positive Elektrode nach Anspruch 2, ferner umfassend ein polares Lösungsmittel, wobei
die Epoxidverbindung und das Vinylidenfluoridpolymer im polaren Lösungsmittel gelöst oder dispergiert sind.

5. Positiv-Elektroden-Mischung, umfassend:
das Bindemittel für eine positive Elektrode nach einem der Ansprüche 1 bis 4 und
ein Positiv-Elektroden-Aktivmaterial.

6. Positive Elektrode, umfassend:
einen Stromabnehmer und
eine Positiv-Elektroden-Mischungsschicht, die auf dem Stromabnehmer angeordnet ist,
wobei die Positiv-Elektroden-Mischungsschicht ein gehärtetes Produkt der Positiv-Elektroden-Mischung nach Anspruch 5 umfasst.

7. Sekundärbatterie mit wasserfreiem Elektrolyten, umfassend die positive Elektrode nach Anspruch 6.

## Revendications

1. Liant pour une électrode positive, le liant devant être utilisé pour une électrode positive d'une batterie secondaire à électrolyte non aqueux et comprenant :
un polymère de fluorure de vinylidène ; et
un composé époxy comprenant deux groupes époxy ou plus,
le composé époxy ayant un équivalent époxy de 500 g/éq. ou moins, et
une quantité totale du polymère de fluorure de vinylidène par rapport à un nombre total de moles des groupes époxy dans le liant pour une électrode positive étant de 600 g/éq. ou plus et de 3000 g/éq. ou moins.

2. Liant pour une électrode positive selon la revendication 1, dans lequel le polymère de fluorure de vinylidène comprend :
une unité structurelle dérivée du fluorure de vinylidène ; et
un motif structural dérivé d'au moins un composé choisi dans le groupe constitué par un composé représenté par l'une quelconque des formules générales (1) à (3) suivantes, un acide basique insaturé, un monoester d'acide basique insaturé, et un composé alkyl-vinyle halogéné,
dans lequel une proportion du motif structurel dérivé du fluorure de vinylidène dans le polymère de fluorure de vinylidène est égale ou supérieure à 50 % en masse et inférieure ou égale à 99,9 % en masse : 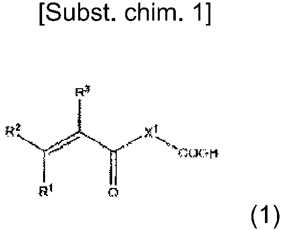
où, dans la formule générale (1), R¹ à R³ représentent chacun indépendamment un atome d'hydrogène, un atome de fluor, un atome de chlore ou un groupe alkyle ayant 1 ou plus et 5 ou moins atomes de carbone ; et X¹ représente un groupe atomique d'une masse moléculaire égale ou inférieure à 472, avec une chaîne principale ayant 1 atome ou plus et 19 atomes ou moins ; 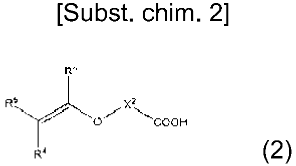
où, dans la formule générale (2), R⁴ à R⁶ représentent chacune indépendamment un atome d'hydrogène, un atome de fluor, un atome de chlore ou un groupe alkyle ayant 1 ou plus et 5 ou moins atomes de carbone ; et X² représente un groupe atomique d'un poids moléculaire égal ou inférieur à 484, avec une chaîne principale ayant 1 atome ou plus et 19 atomes ou moins ; et 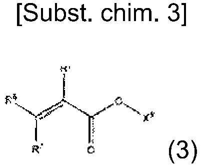
où, dans la formule générale (3), R⁷ à R⁹ représentent chacune indépendamment un atome d'hydrogène, un atome de fluor, un atome de chlore ou un groupe alkyle ayant 1 ou plus et 5 ou moins atomes de carbone ; et X³ représente un atome d'hydrogène ou un groupe d'hydrocarbures ayant 1 ou plus et 5 ou moins atomes de carbone et comprenant un ou plusieurs groupes hydroxy.

3. Liant pour une électrode positive selon la revendication 1, comprenant en outre un solvant polaire, dans lequel
le composé époxy et le polymère de fluorure de vinylidène sont dissous ou dispersés dans le solvant polaire.

4. Liant pour une électrode positive selon la revendication 2, comprenant en outre un solvant polaire, dans lequel
le composé époxy et le polymère de fluorure de vinylidène sont dissous ou dispersés dans le solvant polaire.

5. Mélange pour électrode positive comprenant :
le liant pour une électrode positive décrite selon l'une quelconque des revendications 1 à 4 ; et
un matériau actif d'électrode positive.

6. Électrode positive, comprenant :
un collecteur de courant ; et
une couche de mélange pour électrode positive disposée sur le collecteur de courant,
la couche de mélange d'électrodes positives comprenant un produit durci du mélange d'électrodes positives décrit dans la revendication 5.

7. Batterie secondaire à électrolyte non aqueux comprenant l'électrode positive décrite selon la revendication 6.
